# EUROPEAN PATENT SPECIFICATION

(11) **EP 2 524 823 B1**
(45) Date of publication and mention of the grant of the patent: **11.07.2018**
(21) Application number: 12168334.6
(22) Date of filing: 16.05.2012
(51) Int. Cl.: B60G 3/01

(54) **A plurality of suspension devices for vehicles**
Vielzahl von Fahrzeugaufhängungsvorrichtungen
Pluralité de dispositifs de suspension pour véhicules

(30) Priority: 16.05.2011 IT VR20110103
(43) Date of publication of application: 21.11.2012
(73) Proprietor: Anselmi, Giorgio, 37030 Badia Calavena (VR) (IT)
(72) Inventor: Anselmi, Giorgio, 37030 Badia Calavena (VR) (IT)
(74) Representative: Modiano, Micaela Nadia

(56) References cited:
- EP-A1- 0 307 263
- WO-A1-2009/052612
- DE-A1-102009 021 670
- FR-A- 1 012 597
- FR-A1- 2 400 147
- GB-A- 2 410 014
- US-A- 2 155 521

## Description

The present invention relates to a plurality of suspension devices for vehicles.

As is known, in vehicles the wheels are connected to the chassis by way of suspension devices which make it possible to control and cushion the stresses that are transmitted from the wheels to the chassis, thus maintaining the chassis in constant stability during the travel of the vehicle.

Italian patent no. 1342451 discloses a suspension which is constituted by a cylindrical enclosure, to which the rotation pin of the wheel is externally fixed and which internally accommodates a piston, which can move axially, relative to the cylindrical enclosure, and integrally connected to the chassis of the vehicle. Inside the cylindrical enclosure, the piston separates an upper chamber from a lower chamber, which are both occupied by a working fluid, such as oil or air.

In particular, when applied on steered or self-steering wheels, the cylindrical enclosure is capable of rotating about its own axis relative to the piston, so as to permit the angular steering movement of the wheel with respect to the vehicle chassis.

Although such implementation solution makes it possible to attain a considerable versatility of use with respect to other types of suspension, it is not however devoid of drawbacks.

First, from a structural point of view, the knocks received by the wheel are discharged onto the cylindrical enclosure, occasionally causing deformations of the cylindrical enclosure.

Moreover, the necessity of welding the rotation pin of the wheel to the cylindrical enclosure can also lead to problems of deformation of the cylindrical enclosure or damage to its sealing gaskets.

Another drawback of this solution is due to the fact that, since the lower part of the cylindrical enclosure is considerably stressed, limitations are encountered in the seal of the lower chamber and in the lifetime of the suspension.

Another disadvantage of such suspension derives from the frequent breakage of the pipes connecting the chambers of the cylindrical enclosure, owing to the vertical and angular movements of the enclosure with respect to the piston.

Examples of suspension systems for vehicles are available, for example, from documents EP 0 307 263, FR 2 400 147, US 2 155 521, DE 10 2009 021670 and FR 1 012 597.

WO 2009/052612, which shows the preamble of claim 1, discloses a vehicle suspension system that remotely locates an energy storage device and damping device. An upright comprises a spindle, brake caliper, and structure to hold a main strut shaft parallel to a secondary strut shaft. The suspension's motion is controlled by the shafts which slide relative to the sprung part of the vehicle. The main strut shaft includes a pumping piston. The fluid displaced by the pumping piston flows through a hydraulic connection to a remote suspension module mounted to the sprung part of the vehicle. The remote suspension module hydraulically transmits the wheel motion to the remote energy storage device and damping device. A steering arm rotating around the main strut shaft is configured to allow both struts to slide through it.

The aim of the present invention is to solve the above mentioned problems in a very simple and effective manner, by providing a suspension device for vehicles which is capable of offering high levels of reliability and safety in respect of previous solutions.

Within this aim, an object of the present invention is to provide a suspension device that makes it possible to lower the load center of gravity of the vehicle, thus increasing the stability of the vehicle.

Another object of the invention is to provide a suspension device that, in the event of application on steered or self-steering wheels, makes it possible to execute a high steering angle of the wheel, without the risk of interfering with the brakes or with the various supporting elements.

Another object of the present invention is to provide a suspension device for vehicles that can be made at low cost.

This aim and these and other objects which will become better apparent hereinafter are achieved by a plurality of suspension devices for vehicles according to the invention, as defined in claim 1.

Further characteristics and advantages of the invention will become better apparent from the description of a preferred, but not exclusive, embodiment of the plurality of suspension devices for vehicles according to the invention, which is illustrated by way of non-limiting example in the accompanying drawings, wherein:

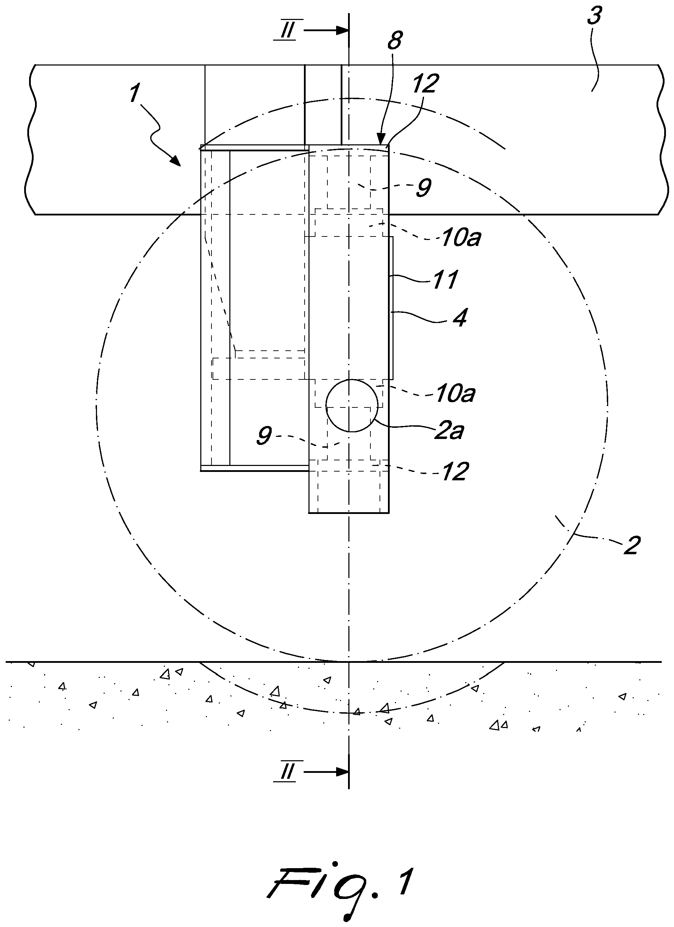

Figure 1 is a schematic side view of the suspension device according to the invention, with parts shown transparent;

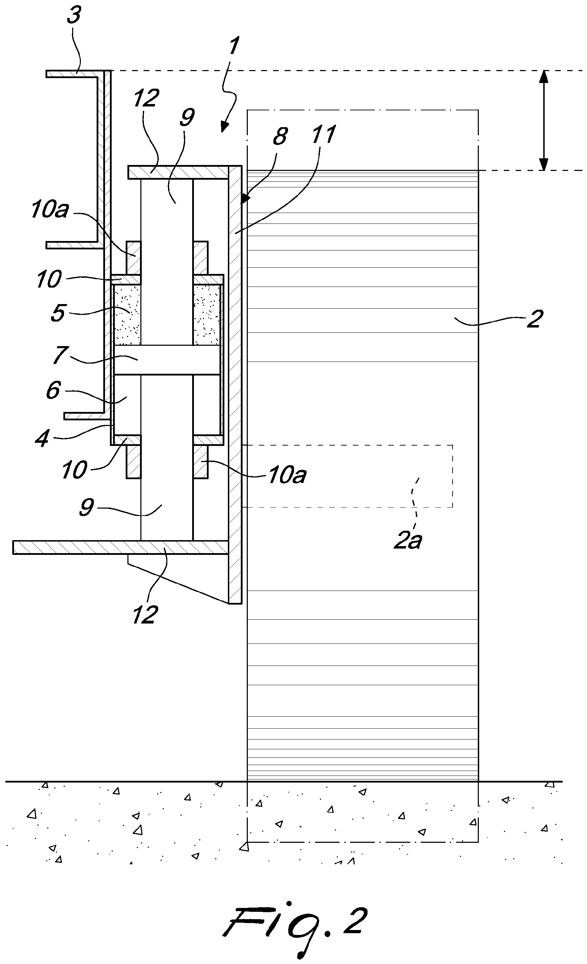

Figure 2 is a sectional view taken along the line II-II in Figure 1;

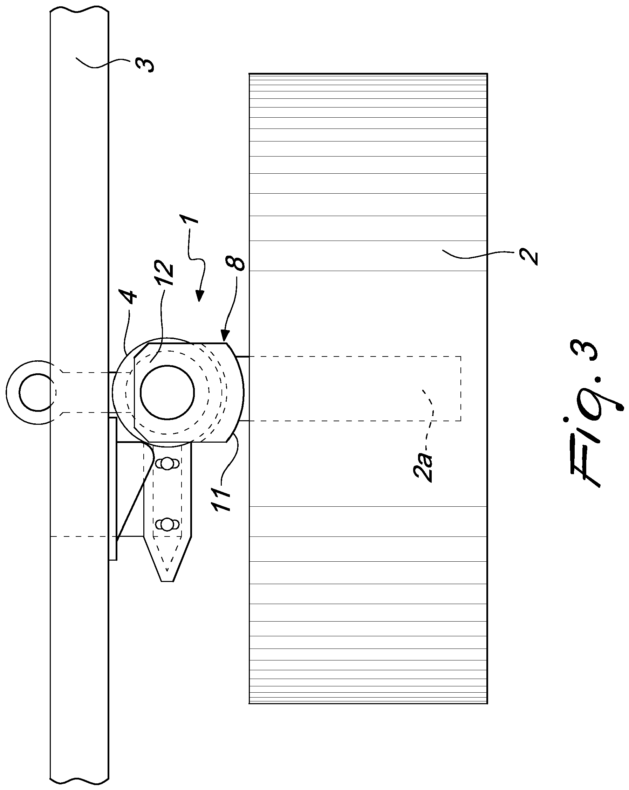

Figure 3 is a schematic view from above of the suspension device according to the invention;
Figures 4, 5 and 6 are schematic side views of a vehicle with three wheels associated therewith and connected to the chassis of the vehicle by way of respective suspension devices according to the invention, shown in different operation situations.

With reference to the figures, the suspension device for vehicles according to the invention, generally designated by the reference numeral 1, comprises means for connection between a wheel 2 and the chassis 3 of a vehicle such as, for example, a trailer, a semitrailer, a truck, an automobile or any other type of vehicle provided with wheels.

Such connection means provide an elastic connection between the wheel 2 and the chassis 3 of the vehicle, thus allowing maintenance of stability of the vehicle.

In particular, the connection means comprise a cylindrical enclosure 4, which defines, internally, two chambers, which are respectively constituted by an upper chamber 5 and by a lower chamber 6, which are separated hermetically from each other by way of a piston 7, which can slide axially with respect to the cylindrical enclosure 4.

According to the invention, the cylindrical enclosure 4 is integrally fixed to the chassis 3 of the vehicle, while the piston 7 is connected to the wheel 2.

Also according to the invention, in the upper chamber 5 means are provided for elastic reaction to the sliding of the piston 7.

In essence, the load bearing on the chassis 3 of the vehicle is counterbalanced by the contrasting action exerted by the elastic reaction means which are provided in the upper chamber 5.

Advantageously, the elastic reaction means can comprise a mechanical element for elastic contrast such as, for example, a spring, not shown, which acts between the piston 7 and the inner walls of the cylindrical enclosure 4, or they can be obtained by providing, in the upper chamber 5, a working fluid which can, conveniently, be constituted either by a compressible fluid, such as air or another gas, or by an incompressible fluid, such as oil or another liquid, according to requirements. In this manner, support of the load bearing on the chassis 3 of the vehicle is ensured by the force of reaction owing to the compression of the spring or of the working fluid contained in the upper chamber 5.

It should be noted that the structuring of the device according to the invention makes it possible to achieve, with respect to the previously known solution, a perceptible improvement in the seal of the working fluid in the cylindrical enclosure 4 and an increase in the lifetime of the suspension device, the upper part of the device being less stressed than the lower part thereof.

It must likewise be observed that, with the structuring of the device according to the invention, the knocks received by the wheel 2 during the travel of the vehicle are transmitted to the piston 7 and not to the cylindrical enclosure 4, as in the previous solution.

Advantageously, if the working fluid is constituted by a compressible fluid, the upper chamber 5 can be hermetically sealed off from the outside of the cylindrical enclosure 4.

If, however, the working fluid is constituted by an incompressible fluid, then the elasticity of the suspension is, conveniently, controlled by providing for the connection of the upper chamber 5 to a pressure accumulator, not shown, which makes it possible to dampen the load peaks received from the wheel 2, during the travel of the vehicle.

If the spring is used, then the elasticity of the suspension derives directly from the elasticity of the spring.

Delving deeper into the details of construction of the device according to the invention, it will be noted that the piston 7 is integral with a supporting structure 8 to which the rotation pin 2a of the wheel 2 is fixed.

Conveniently, the piston 7 is connected to the supporting structure 8 by way of at least one stem 9 which passes slidingly through a corresponding terminal closure head 10 of the cylindrical enclosure 4.

More preferably, the piston 7 is connected to the supporting structure 8 by a pair of stems 9, which are mutually opposite, each one of which passes slidingly through a corresponding terminal closure head 10 of the cylindrical enclosure 4.

Conveniently, the terminal closure heads 10 of the cylindrical enclosure 4 are structured so as to have a reinforcement sleeve 10a which extends around the stems 9 and the function of which is to support the radial loads that are transmitted from the wheel 2 to the cylindrical enclosure 4.

Advantageously, each reinforcement sleeve 10a comprises an annular outer body made of steel which is fixed to the cylindrical enclosure 4 by way of welding or screwing.

Conveniently, inside the outer annular body adapted receptacles are provided for gaskets which are intended to provide a seal on the stem 9, and a seat is provided for a bushing, which constitutes the actual element that supports the radial loads, or for a cartridge with the various components listed previously, i.e. the bushing and the gaskets, already mounted on it.

The bushing that supports the radial loads can be made from various materials, including for example resin, material comprised of glued layers of fabric and commonly known on the market as RALKO, composite bimetallic material made of bronze alloy and steel with sintered core, or other plastic materials as a function of the load and of the desired lifetime.

Advantageously, in order to allow the possibility to steer the wheel 2 with respect to the chassis 3 of the vehicle, the piston 7 can rotate, relative to the cylindrical enclosure 4, about the axis of the cylindrical enclosure 4.

Conveniently, the supporting structure 8 can optionally be connected to means of commanding the steering of the wheel 2, which can, for example, be constituted by a lever arm, which is fixed to the supporting structure 8 and is pivoted to an actuation bar, which can be commanded by a steering system, of the manual or automatic type, in order to actuate the rotation of the supporting structure 8 about the axis of the cylindrical enclosure 4 and produce the steering of the wheel 2 as a consequence.

If however it is desired to render the wheel 2 self-steering, the cylindrical enclosure 4 is arranged with its axis inclined with respect to a vertical axis that passes through the rotation axis of the wheel 2, so as to shift the point at which the wheel 2 rests on the ground with respect to the vertical axis, thus creating a rotation lever arm for the wheel 2.

Otherwise, the cylindrical enclosure 4 can be arranged, with its axis, substantially vertical i.e. substantially at right angles to the ground on which the wheel 2 rests, as shown in the accompanying drawings.

It is likewise possible to render the wheel 2 self-steering by arranging the cylindrical enclosure 4 vertical and thus obtaining the necessary offset for the rotation of the wheel 2 by fixing the rotation pin 2a of the wheel 2 out of alignment with the axis of the cylindrical enclosure 4.

It should be noted that the arrangement of the rotation pin 2a of the wheel 2 on the supporting structure 8 which is integral with the piston 7 and the fixing of the cylindrical enclosure 4 to the chassis 3 of the vehicle enables a reduction in encumbrance, by allowing, with respect to the previous solution, wider steering angles, which previously were not possible because of interference with the braking apparatuses of the wheel.

As can be seen in the example shown in the figures, the supporting structure 8 is provided by a supporting wall 11, which is arranged laterally to the cylindrical enclosure 4 and from the ends of which two connection arms 12, each one of which is connected to a respective stem 9 of the piston 7, diverge toward the cylindrical enclosure 4. On its opposite side with respect to the cylindrical enclosure 4, the supporting wall 11 is integral with the rotation pin 2a of the wheel 2.

The rotation pin 2a of the wheel 2 is preferably fixed in a region proximate to the lower edge of the supporting wall 11, in such a way that the wheel 2 is arranged as low as possible with respect to the supporting structure 8.

It should be noted that, by fixing the rotation pin 2a of the wheel 2 to the supporting wall 11, the possibility is obtained of positioning the rotation pin 2a at a height from the ground which is lower than in the previous solution, so as to be able to lower the load center of gravity of the vehicle, with consequent improvement of the roadholding of the vehicle even with massive loads.

Conveniently, the cylindrical enclosure 4 can be fixed to the chassis 3 of the vehicle by way of one or more perforated connection plates, which are integral with the cylindrical enclosure 4 and are provided with a plurality of holes, which are arranged in lines along a direction substantially parallel to the axis of the cylindrical enclosure 4, and are intended to accommodate connection screws which can be inserted in corresponding accommodation holes provided on a supporting element associated with the chassis 3 of the vehicle.

For example, if the vehicle is constituted by a tank trailer, the supporting element can be constituted by a cross-member, which is cradle-shaped in an upward region in order to accommodate a cylindrical tank and is provided, at each one of its opposite ends, with a corresponding row of accommodation holes into which the connection screws can be inserted, which fix two suspension devices according to the invention, which are connected to wheels 2 located at opposite ends with respect to the longitudinal axis of the tank trailer, to the element for supporting the perforated connection plates associated with the cylindrical enclosure 4.

It is also possible for the upper and lower chambers 5 and 6 of two suspension devices 1 mounted on opposite sides of the chassis 3 of the vehicle to be connected to each other, by way of communication pipes. In such case, the working fluid will also be present in the lower chamber 6. Such embodiment offers the possibility of recovering the stability of the chassis 3, thus stabilizing the vehicle, by way of the introduction or extraction of the working fluid from the upper and lower chambers 5 and 6 of the two suspension devices 1 according to the invention which are mounted on opposite sides of the chassis 3. In particular, the introduction or extraction of the working fluid from the chambers of the suspension devices mounted on the vehicle can be controlled by an actuation device, manual or automatic, which intervenes if the vehicle should pass over terrain which is inclined transversely to its motion of advancement, with consequent lifting of one side of the vehicle with respect to the other, by introducing working fluid into the upper chamber 5 of the suspension devices of the wheels that are located on the side of the vehicle which is lower than the other side, and by withdrawing working fluid from the upper chamber 5 of the suspension devices connected to the wheels that are located on the uppermost side of the vehicle, so as to bring the two opposite sides of the vehicle substantially to the same level.

Optionally, it is also possible for the lower chamber 6 of each suspension device 1 of the vehicle to be connectable on command to a pressure source, in order to allow the possibility of individually lifting the wheels 2 of the vehicle, in the event of maintenance and/or repair, without the need to resort to external lifting devices, as in the known art.

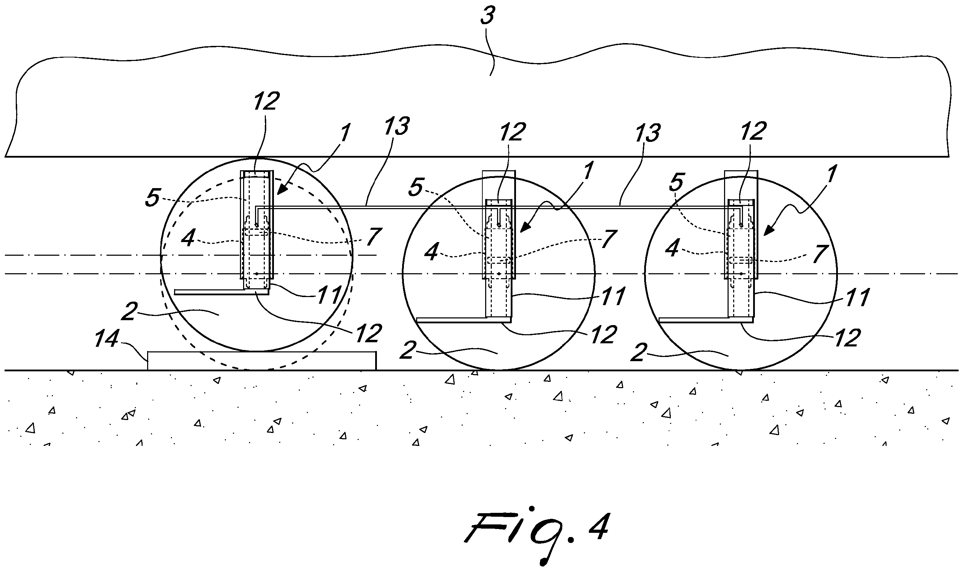

According to another possible embodiment, which is shown by way of example in Figures 4, 5 and 6, the upper chambers 5 of suspension devices 1 mounted on the same side of the chassis 3 of the vehicle are hydraulically connected in series to each other, by way of connection ducts 13.

Figures 4, 5 and 6 illustrate the example of a vehicle which has at least three wheels on each side thereof, while allowing that the observations that follow will apply in general to vehicles with any number of wheels.

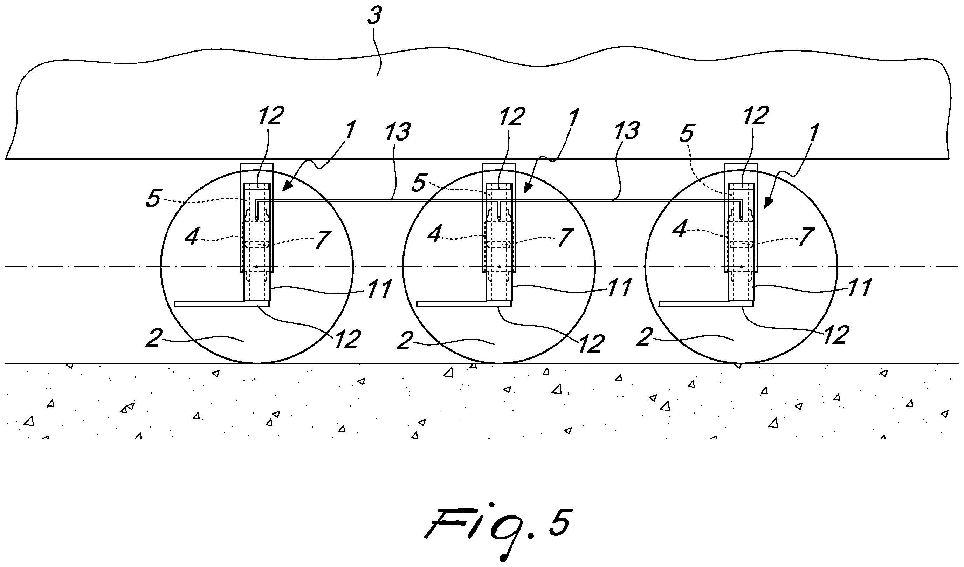

In particular, Figure 5 shows a situation in which the wheels 2 rest on a same plane of the ground. In this case, the pistons 7 connected to the various wheels 2 lie on a same plane which is parallel to the plane of the ground.

If the working fluid is incompressible, when one of the wheels 2 of the vehicle encounters a rise 14 with respect to the plane of the ground on which the other wheels rest, as shown in Figure 4, such wheel is subjected to an upward excursion equal to the height of the rise 14 with respect to the plane of the ground, thus determining an upward stroke of the piston 7 connected thereto which produces a reduction of the useful volume of the upper chamber 5 of the corresponding suspension device 1 and the output of a corresponding quantity of the working fluid from the upper chamber 5.

The working fluid output from the upper chamber 5 of the suspension device 1 connected to the wheel 2 positioned on the rise 14 is uniformly distributed, thanks to the connection ducts 13, among the upper chambers 5 of the suspension devices 1 of the other wheels 2, which will undergo, on the piston 7 connected thereto, a downward thrust proportional to the thrust exerted by the piston 7 of the wheel 2 positioned on the rise 14 and a consequent downward movement.

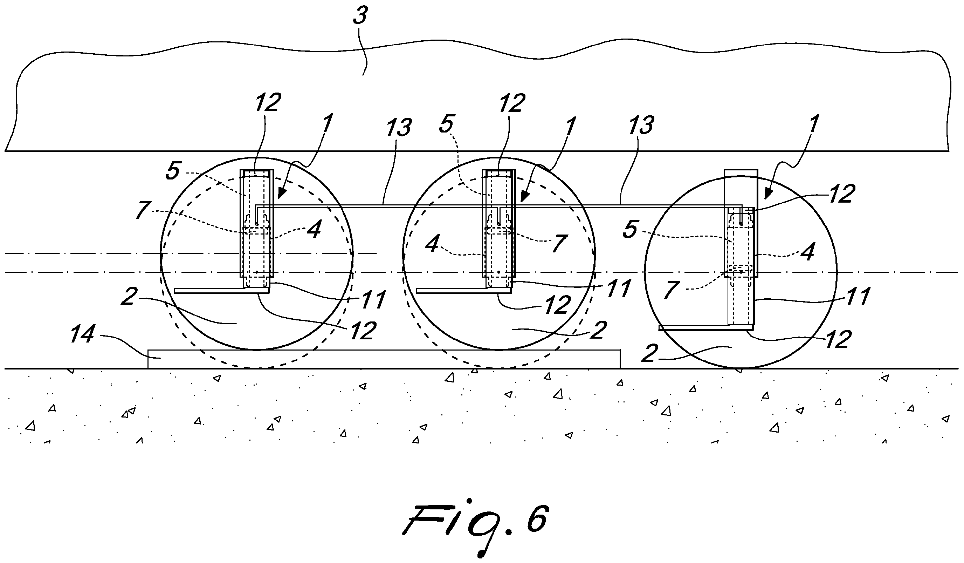

With reference to the example in Figure 6, if two wheels 2 located on one side of the vehicle should ascend a rise 14 of the terrain, then the upward excursion undergone by the wheels 2 on the rise 14 is counterbalanced by a downward excursion of the third wheel 2, as an effect of the distribution of the working fluid among the upper chambers 5 of the suspension devices 1 associated with the wheels 2.

Similar distribution of the working fluid and consequent counterbalancing of the excursions undergone by the wheels 2 would occur if instead of a rise 14, one or more wheels should encounter a dip in the terrain.

Operation of the suspension device according to the invention is the following.

The load bearing on the chassis 3 of the vehicle is transmitted to the cylindrical enclosure 4 and is counterbalanced by the pressure of the working fluid contained in the upper chamber 5 or by the action of the spring.

The axial sliding of the piston 7 along the cylindrical enclosure 4 with consequent reaction of the working fluid contained in the upper chamber 5 or of the spring enables the wheel 2 to maintain traction on the ground and enables the vehicle to maintain stability, without transmission of impulsive loads to the chassis 3.

In practice it has been found that the invention has achieved the intended aim and objects and in particular attention is drawn to the fact that the suspension device according to the invention has, with respect to the previous solution, a better seal and a longer lifetime, in that the active part of the suspension is in the upper part of the device according to the invention, which is less subject to stresses than the lower part.

Another advantage of the invention derives from the fact that, by fixing the rotation pin of the wheel with respect to the piston, instead of to the cylindrical enclosure as in the previous solution, the situation is prevented whereby the knocks undergone by the wheel on the ground can cause deformations of the cylindrical enclosure.

Moreover, the fixing of the rotation pin of the wheel to the supporting structure of the piston also makes it possible to customize the suspension with different rotation pins, without having to weld to the cylindrical enclosure and thus avoiding deforming the cylindrical enclosure or damaging the sealing gaskets thereof.

Another important advantage to be highlighted consists in that, due to its structuring, the suspension device according to the invention makes it possible to shift the fixing of the rotation pin of the wheel downward, with consequent lowering of the load center of gravity, or of the loading surface of the vehicle, in this manner achieving the possibility of increasing the load volume, when required, and of increasing the stability of the vehicle, especially in the transport of tanks, tip-up with a cradle-shaped bottom or structures mounted in the chassis, such as for example for semi-trailers for the transport of glass sheets or marble slabs or of metal sheets with height that exceeds 2.5 m.

Another advantage of the device according to the invention, with respect to the previous solution, is that of making it possible, when requested, to increase the excursion range of the wheel. In fact, the possibility of being able to vary the anchor point of the rotation pin of the wheel on the supporting structure makes it possible, by elongating the stems of the piston and the cylindrical enclosure, to increase the vertical excursion range, upward and downward, of the wheel, as a function of the type of body of the vehicle and of the height from the ground of the loading surface of the vehicle as well. The increase in the excursion range of the wheel makes possible a number of improvements in operation and especially in safety: it makes it possible, in fact, to overcome greater unevenness of terrain, without creating load peaks on the chassis of the vehicle or on the supporting structure of the wheel, owing to the stroke limit of the suspension; it allows a greater excursion range of the chassis of the vehicle during the hook-lifting of containers, tanks or other various apparatuses adapted to hook-lifting, for loading, transport and unloading without the use of other means; it allows a greater inclination of the chassis of the vehicle vertically (or in the direction of travel), in order to facilitate the loading and unloading of means or of materials; lastly, it makes it possible to increase safety by way of an adapted manual or automatic device, which makes it possible to keep the load horizontal even when the vehicle is over a pothole on which the wheels are resting and heavily inclined, by preventing, within certain limits, the tilting of the vehicle, the latter function moreover not being possible with suspensions that are normally used since the right-hand wheel is connected with the left-hand wheel by way of a rigid beam that constitutes the body of the axle or anchor points on the chassis, even with independent suspensions.

It is also important to emphasize that, in application on self-steering wheels or controlled steered wheels, the structuring of the device according to the invention makes possible, again with respect to the previous solution, a reduction of the encumbrances thus allowing greater steering range of the wheel, which before was not possible due to interference with the brakes, and in particular with the brake chamber of the brake associated with the wheel.

It should also be noted that in the device according to the invention, the cylindrical enclosure being integral with the chassis of the vehicle, the possibility is also eliminated of breakage of the communication pipes between the chambers of the suspension, since they are no longer affected by vertical or angular movements, as occurs in the previous solution.

Last but not least, it should also be noted that the structuring of the device according to the invention also makes it possible to keep the height of the supporting structure from the ground constant, the structure being integral with the rotation pin of the wheel. In fact, by making the supporting structure integral with the wheel in the upward and downward excursions of the wheel, the distance of the lower edge of the supporting structure always remains constant, even in the presence of major differences in level of the ground on which the wheel is resting.

In the previous solution, however, this distance decreased when the wheel was raised and increased when it was lowered; in order to maintain the minimum height from the ground when the wheel was raised, it was necessary to raise the anchoring of the rotation pin of the wheel, as a consequence losing the advantages indicated above regarding the increase of the excursion range of the wheel.

All the characteristics of the invention indicated as advantageous, convenient or similar may also be missing or be substituted by equivalent characteristics.

The invention, thus conceived, is susceptible of numerous modifications and variations, all of which are within the scope of the appended claims.

In practice the materials employed, as well as the contingent shapes and dimensions, may be any according to requirements.

Moreover, all the details may be substituted by other, technically equivalent elements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A plurality of suspension devices (1) for vehicles, each suspension device comprising means for connection between a wheel (2) of a vehicle and the chassis (3) of said vehicle, said connection means comprising a cylindrical enclosure (4) which defines internally an upper chamber (5) and a lower chamber (6), which are mutually separated by a piston (7) that can slide axially with respect to said cylindrical enclosure (4), wherein said cylindrical enclosure (4) is integrally fixed to the chassis (3) of the vehicle and said piston (7) is integrally connected to a supporting structure (8) that is integral with the rotation pin (2a) of said wheel (2) by way of at least one stem (9) which passes slidingly through a respective terminal closure head (10) of said cylindrical enclosure (4), in said upper chamber (5) means being provided for elastic reaction to the sliding of said piston (7), said terminal closure heads (10) having a reinforcement sleeve (10a) which extends around said at least one stem (9) and is adapted to support the radial loads transmitted from said wheel (2) to said cylindrical enclosure (4), **characterized in that** said upper chamber (5) is hydraulically connected to the upper chamber (5) of at least one other said suspension device (1) connected to a corresponding wheel arranged on the same side of said vehicle with respect to said wheel (2), and **in that** said piston (7) can rotate, relative to said cylindrical enclosure (4), about the axis of said cylindrical enclosure (4).

2. The suspension devices according to claim 1, **characterized in that** said elastic reaction means comprise a working fluid accommodated in said upper chamber (5).

3. The suspension devices according to claim 1, **characterized in that** said elastic reaction means comprise a mechanical element for elastic contrast.

4. The suspension devices according to claim 2, **characterized in that** said working fluid is constituted by a compressible fluid.

5. The suspension devices according to claim 2, **characterized in that** said working fluid is constituted by an incompressible fluid, said upper chamber (5) being connectable to a pressure accumulator which is adapted to dampen the load peaks received from said wheel (2).

6. The suspension devices according to one or more of the preceding claims, **characterized in that** said piston (7) is connected to said supporting structure (8) by way of a pair of stems (9), which are mutually opposite, each stem passing slidingly through corresponding terminal closure heads (10) of said cylindrical enclosure (4).

7. The suspension devices according to one or more of the preceding claims, **characterized in that** said cylindrical enclosure (4) is arranged with its axis substantially vertical.

8. The suspension devices according to one or more of the preceding claims, **characterized in that** said supporting structure (8) is connected to means for actuating the steering of said wheel (2).

9. The suspension devices according to one or more of the claims 1-6 or 8, **characterized in that** said cylindrical enclosure (4) is arranged so that its axis is inclined with respect to a vertical axis that passes through the rotation axis of said wheel (2).

10. The suspension devices according to one or more of the preceding claims, **characterized in that** the rotation pin (2a) of said wheel (2) is axially offset with respect to the axis of said cylindrical enclosure (4).

11. The suspension devices according to claim 6, **characterized in that** said supporting structure (8) comprises a supporting wall (11), which is arranged laterally to said cylindrical enclosure (4) and has, at its opposite ends, a pair of connecting arms (12), which protrude toward said cylindrical enclosure (4) and are each connected to a respective stem (9) of said piston (7), said supporting wall (11) supporting, on its opposite side with respect to said cylindrical enclosure (4), the rotation pin (2a) of said wheel (2).

## Patentansprüche

1. Eine Vielzahl von Fahrzeugaufhängungsvorrichtungen (1), wobei jede Aufhängungsvorrichtung Mittel zur Verbindung zwischen einem Fahrzeugrad (2) und dem Fahrzeuggestell (3) umfasst, wobei die Verbindungsmittel ein zylindrisches Gehäuse (4) umfassen, das innen eine obere Kammer (5) und eine untere Kammer (6) bestimmt, die voneinander durch einen Kolben (7) getrennt sind, welcher mit Bezug auf das zylindrische Gehäuse (4) axial gleiten kann; wobei das zylindrische Gehäuse (4) integral am Fahrzeuggestell (3) befestigt ist und der Kolben (7) integral mit einer tragenden Struktur (8) verbunden ist, die integral mit dem Drehzapfen (2a) des Rades (2) über mindestens einen Schaft (9) ist, welcher verschiebbar durch einen entsprechenden Endverschlusskopf (10) des zylindrischen Gehäuses (4) verläuft; wobei in der oberen Kammer (5) Mittel zur elastischen Reaktion auf das Gleiten des Kolbens (7) angebracht sind, wobei die Endverschlussköpfe (10) eine Verstärkungshülse (10a) haben, die sich um den mindestens einen Schaft (9) erstreckt und ausgebildet ist, um die radialen Lasten zu tragen, die von dem Rad (2) auf das zylindrische Gehäuse (4) übertragen werden; **dadurch gekennzeichnet, dass** die obere Kammer (5) hydraulisch mit der oberen Kammer (5) mindestens einer anderen Aufhängungsvorrichtung (1) verbunden ist, die mit einem entsprechenden Rad verbunden ist, das auf derselben Seite des Fahrzeugs, mit Bezug auf das Rad (2), angebracht ist, und dadurch, dass der Kolben (7) sich, relativ zu dem zylindrischen Gehäuse (4), um die Achse des zylindrischen Gehäuses (4) drehen kann.

2. Die Aufhängungsvorrichtungen gemäß Anspruch 1, **dadurch gekennzeichnet, dass** die elastischen Reaktionsmittel ein Arbeitsfluid umfassen, das sich in der oberen Kammer (5) befindet.

3. Die Aufhängungsvorrichtungen gemäß Anspruch 1, **dadurch gekennzeichnet, dass** die elastischen Reaktionsmittel ein mechanisches Element für elastischen Kontrast umfassen.

4. Die Aufhängungsvorrichtungen gemäß Anspruch 2, **dadurch gekennzeichnet, dass** das Arbeitsfluid in einem komprimierbaren Fluid besteht.

5. Die Aufhängungsvorrichtungen gemäß Anspruch 2, **dadurch gekennzeichnet, dass** das Arbeitsfluid in einem inkomprimierbaren Fluid besteht, wobei die obere Kammer mit einem Druckakkumulator verbindbar ist, der ausgebildet ist, um die Lastspitzen, die von dem Rad (2) empfangen werden, zu dämpfen.

6. Die Aufhängungsvorrichtungen gemäß einem oder mehreren der obigen Ansprüche, **dadurch gekennzeichnet, dass** der Kolben (7) mit der tragenden Struktur (8) über ein Paar von Schäften (9) verbunden ist, die einander gegenüberliegen, wobei jeder Schaft verschiebbar durch entsprechende Endverschlussköpfe (10) des zylindrischen Gehäuses (4) verläuft.

7. Die Aufhängungsvorrichtungen gemäß einem oder mehreren der obigen Ansprüche, **dadurch gekennzeichnet, dass** das zylindrische Gehäuse (4) mit seiner Achse im Wesentlichen vertikal angeordnet ist.

8. Die Aufhängungsvorrichtungen gemäß einem oder mehreren der obigen Ansprüche, **dadurch gekennzeichnet, dass** die tragende Struktur (8) mit Mitteln zur Betätigung der Lenkung des Rades (2) verbunden ist.

9. Die Aufhängungsvorrichtungen gemäß einem oder mehreren der Ansprüche 1-6 oder 8, **dadurch gekennzeichnet, dass** das zylindrische Gehäuse (4) so angeordnet ist, dass seine Achse mit Bezug auf eine vertikale Achse, die durch die Drehachse des Rades (2) verläuft, schräg ist.

10. Die Aufhängungsvorrichtungen gemäß einem oder mehreren der obigen Ansprüche, **dadurch gekennzeichnet, dass** der Drehzapfen (2a) des Rades (2) mit Bezug auf die Achse des zylindrischen Gehäuses (4) axial versetzt ist.

11. Die Aufhängungsvorrichtungen gemäß Anspruch 6, **dadurch gekennzeichnet, dass** die tragende Struktur (8) eine tragende Wand (11) umfasst, die seitlich von dem zylindrischen Gehäuse (4) angeordnet ist und an ihren gegenüberliegenden Enden ein Paar von Verbindungsarmen (12) hat, welche zu dem zylindrischen Gehäuse (4) hin ragen und jeweils mit einem entsprechenden Schaft (9) des Kolbens (7) verbunden sind, wobei die tragende Wand (11) an ihrer Seite, die dem zylindrischen Gehäuse (4) gegenüberliegt, den Drehzapfen (2a) des Rades (2) trägt.

## Revendications

1. Pluralité de dispositifs de suspension (1) pour véhicules, chaque dispositif de suspension comprenant des moyens pour connexion entre une roue (2) d'un véhicule et le châssis (3) dudit véhicule, lesdits moyens de connexion comprenant une enceinte cylindrique (4) qui définit intérieurement une chambre supérieure (5) et une chambre inférieure (6), qui sont mutuellement séparées par un piston (7) qui peut coulisser axialement par rapport à ladite enceinte cylindrique (4), dans lequel ladite enceinte cylindrique (4) est fixée intégralement au châssis (3) du véhicule et ledit piston (7) est connecté intégralement à une structure de support (8) qui est d'un seul bloc avec l'axe de rotation (2a) de ladite roue (2) au moyen d'au moins une tige (9) qui passe de manière coulissante à travers une tête d'enceinte terminale (10) respective de ladite enceinte cylindrique (4), dans ladite chambre supérieure (5) des moyens étant fournis pour une réaction élastique au coulissement dudit piston (7), lesdites têtes d'enceinte terminales (10) ayant une chemise de renforcement (10a) qui s'étend autour de ladite au moins une tige (9) et est adaptée pour supporter les charges radiales transmises depuis ladite roue (2) à ladite enceinte cylindrique (4), **caractérisés en ce que** ladite chambre supérieure (5) est connectée hydrauliquement à la chambre supérieure (5) d'au moins un autre dit dispositif de suspension (1) connecté à une roue correspondante agencée sur le même côté dudit véhicule par rapport à ladite roue (2), et **en ce que** ledit piston (7) peut tourner, relativement à ladite enceinte cylindrique (4), autour de l'axe de ladite enceinte cylindrique (4).

2. Dispositifs de suspension selon la revendication 1, **caractérisés en ce que** lesdits moyens de réaction élastiques comprennent un fluide de travail accueilli dans ladite chambre supérieure (5).

3. Dispositifs de suspension selon la revendication 1, **caractérisés en ce que** lesdits moyens de réaction élastiques comprennent un élément mécanique pour contraste élastique.

4. Dispositifs de suspension selon la revendication 2, **caractérisés en ce que** ledit fluide de travail est constitué par un fluide compressible.

5. Dispositifs de suspension selon la revendication 2, **caractérisés en ce que** ledit fluide de travail est constitué par un fluide incompressible, ladite chambre supérieure (5) pouvant être connectée à un accumulateur de pression qui est adapté pour amortir les pics de charge reçus depuis ladite roue (2).

6. Dispositifs de suspension selon une ou plus des revendications précédentes, **caractérisés en ce que** ledit piston (7) est connecté à ladite structure de support (8) au moyen d'une paire de tiges (9), qui sont mutuellement opposées, chaque tige passant de manière coulissante à travers des têtes d'enceinte terminales (10) correspondantes de ladite enceinte cylindrique (4).

7. Dispositifs de suspension selon une ou plus des revendications précédentes, **caractérisés en ce que** ladite enceinte cylindrique (4) est agencée avec son axe sensiblement vertical.

8. Dispositifs de suspension selon une ou plus des revendications précédentes, **caractérisés en ce que** ladite structure de support (8) est connectée à des moyens pour actionner la direction de ladite roue (2).

9. Dispositifs de suspension selon une ou plus des revendications 1-6 ou 8, **caractérisés en ce que** ladite enceinte cylindrique (4) est agencée de telle manière que son axe est incliné par rapport à un axe vertical qui passe à travers l'axe de rotation de ladite roue (2).

10. Dispositifs de suspension selon une ou plus des revendications précédentes, **caractérisés en ce que** l'axe de rotation (2a) de ladite roue (2) est décalé axialement par rapport à l'axe de ladite enceinte cylindrique (4).

11. Dispositifs de suspension selon la revendication 6, **caractérisés en ce que** ladite structure de support (8) comprend une paroi de support (11), qui est agencée latéralement sur ladite enceinte cylindrique (4) et a, à ses extrémités opposées, une paire de bras de connexion (12) qui font saillie vers ladite enceinte cylindrique (4) et sont chacun connectés à une tige (9) respective dudit piston (7), ladite paroi de support (11) supportant, sur son côté opposé par rapport à ladite enceinte cylindrique (4), l'axe de rotation (2a) de ladite roue (2).
